# EUROPEAN PATENT SPECIFICATION

(11) **EP 2 076 521 B1**
(45) Date of publication and mention of the grant of the patent: **26.12.2012**
(21) Application number: 07793961.9
(22) Date of filing: 14.08.2007
(51) Int. Cl.: C07F 7/08, C07F 7/18

(54) **SYNTHESIS OF SILYLSUBSTITUTED 1,2-ALKYNES**
SYNTHESE VON SILYLSUBSTITUIERTER 1,2-ALKINE
SYNTHÈSE DE 1,2-ALCYNES SILYLÉES

(30) Priority: 16.08.2006 PL 38042206; 13.07.2007 PL 38291407
(43) Date of publication of application: 08.07.2009
(73) Proprietor: Adam Mickiewicz University, 61-712 Poznan (PL)
(72) Inventor: MARCINIEC, Bogdan, 62-020 Poznan (PL); DUDZIEC, Beata, 60-688 Poznan (PL); SZUBERT, Karol, 62-004 Czerwonak (PL); WALKOWIAK, Jedrzej, 60-687 Poznan (PL)
(74) Representative: Lisiecki, Wojciech
(86) International application number: PCT/PL2007/000057
(87) International publication number: WO 2008/020774

(56) References cited:
- US-A- 4 668 812
- MARCINIEC, BOGDAN ET AL: "A new catalytic route for the activation of sp-hybridized carbon-hydrogen bonds" ANGEWANDTE CHEMIE, INTERNATIONAL EDITION , 45(48), 8180-8184 CODEN: ACIEF5; ISSN: 1433-7851, 2006, XP002459036
- MARUYAMA, YOOICHIROH ET AL: "Mechanistic Study of Ruthenium-Catalyzed Hydrosilation of 1-(Trimethylsilyl)-1-buten-3-yne" JOURNAL OF THE AMERICAN CHEMICAL SOCIETY, vol. 120, no. 7, 1998, pages 1421-1429, XP002459037 ISSN: 0002-7863
- HARADA, T.; KATSUHIRA, T.; OSADA, A.; IWAZAKI, K.; MAEJIMA, K.; OKU, A.: "General Method for Preparation of Allenic Zinc Reagents by Three-Carbon Homologation of Triorganozincates: Convergent Three-Component Coupling of Propargylic Substrates, Triorganozincates, and Electrophilic Reagents" J. AM. CHEM. SOC., vol. 118, no. 46, 1996, pages 11377-11390, XP002459038
- ANDERSON, J. C.; WHITING, M.: "Total Synthesis of ( )-Kainic Acid with an Aza-[2,3]-Wittig Sigmatropic Rearrangement as the Key Stereochemical Determining Step" J. ORG. CHEM., vol. 68, no. 16, 2003, pages 6160-6163, XP002459039
- NISHIHARA, Y.; IKEGASHIRA, K.; HIRABAYASHI, K.; ANDO, J.-I.; MORI, A.; HIYAMA, T.: "Coupling Reactions of Alkynylsilanes Mediated by a Cu(I) Salt: Novel Syntheses of Conjugate Diynes and Disubstituted Ethynes" J. ORG. CHEM., vol. 65, no. 6, 2000, pages 1780-1787, XP002459040
- CHUL-HO JUN AND ROBERT H. CRABTREE: "Dehydrogenative silation, isomerization and the control of syn- vs. anti-addition in the hydrosilation of alkynes" JOURNAL OF ORGANOMETALLIC CHEMISTRY, vol. 447, no. 2, 6 April 1993 (1993-04-06), pages 177-187, XP002459041
- ROBERT WEST AND LAVERNE C. QUASS: "Preparation of ethynylsilanes from polychloroethylenes" JOURNAL OF ORGANOMETALLIC CHEMISTRY, vol. 18, 1969, pages 55-67, XP002459042
- GÜNTHER MAIER, REINHARD WOLF, HANS-OTTO KALINOWSKI, ROLAND BOESE: "Kleine Ringe, 79. Synthese und Eigenschaften neuer Silyl-substituierter Cyclobutadiene und Tetrahedrane" CHEMISCHE BERICHTE, vol. 127, no. 1, January 1994 (1994-01), pages 191-200, XP002459043
- MORI A.; HISHIDA T.;SOGA Y.; KAWAKAMI Y.: "A Facile Synthesis of Disiloxanes with Functional Groups" CHEM. LETT., vol. 2, 1995, pages 107-108, XP009092194
- SUGITA H ET AL: "Silylation of 1-Alkynes with Chlorosilanes Promoted by Zinc: Preparation of Alkynylsilanes in a Single Step" TETRAHEDRON LETTERS, ELSEVIER, AMSTERDAM, NL, vol. 36, no. 16, 17 April 1995 (1995-04-17), pages 2769-2772, XP004028349 ISSN: 0040-4039
- ROBERT B. LETTAN II AND KARL A. SCHEIDT: "Lewis Base-Catalyzed Additions of Alkynes Using Trialkoxysilylalkynes" ORGANIC LETTERS, vol. 7, no. 15, 2005, pages 3227-3230, XP002459044
- ZENICHI IKEDA, KOICHIRO OSHIMA, AND SEIJIRO MATSUBARA: "Preparation and Reaction of 2-Aryl-3-silyl-1,3-butadiene" ORGANIC LETTERS, vol. 7, no. 22, 2005, pages 4859-4861, XP002459045
- IAN FLEMING AND JOSEPH M. MWANIKI: "A synthesis of enantiomerically enriched propargyl silanes" J. CHEM. SOC., PERKIN TRANS. 1,, no. 7, 1998, pages 1237-1248, XP002459046
- YASUHIRO FUJIMOTO, ATSUSHI SHIMOJIMA AND KAZUYUKI KURODA: "Surfactant-free synthesis of lamellar and wormhole-like silica mesostructures by using 1-alkynyltrimethoxysilanes" J. MATER. CHEM., vol. 16, no. 10, 2006, pages 986-994, XP002459047
- LEBEDEV, V. N. ET AL: "Fluorosubstituted rhodacarboranes 3,3-(R3P)2-3-H-3,1,2-RhC2B9H11-nFn (n = 1, 2, 4): synthesis, molecular structure, and catalytic properties in hydrosilylation of styrene and phenylacetylene" RUSSIAN CHEMICAL BULLETIN (TRANSLATION OF IZVESTIYA AKADEMII NAUK, SERIYA KHIMICHESKAYA), vol. 46, no. 3, 1997, pages 550-558, XP002459048 ISSN: 1066-5285
- VORONKOV M G ET AL: "Reaction of trialkyl(halomagnesiumethynyl)silanes with tetraethoxysilane" BULL. ACAD. SCI. USSR DIV. CHEM.SCI. (ENGL.TRANSL.), vol. 31, 1982, pages 1908-1910, XP009092155
- VORONKOV M G ET AL: "New transformations of Si-methoxy-substituted 1,2-disilylethylenes and 1,2-disilylacetylenes" BULL. ACAD. SCI. USSR DIV. CHEM.SCI. (ENGL.TRANSL.), vol. 27, 1978, pages 1894-1896, XP009092230
- VORONKOV M G ET AL: "Atranes. LII. 1-Ethynylsilatrane and beta-substituted 1-ethynyl- and 1-vinyl-silatranes" JOURNAL OF GENERAL CHEMISTRY USSR, CONSULTANTS BUREAU, NEW YORK, NY, US, vol. 49, 1979, pages 536-538, XP009092151 ISSN: 0022-1279
- VORONKOV M G ET AL: "Organometallic synthesis of some new ethynylmethoxysilanes" JOURNAL OF GENERAL CHEMISTRY USSR, CONSULTANTS BUREAU, NEW YORK, NY, US, vol. 45, 1975, pages 2592-2594, XP009092229
- KOPYLOVA, L. I. ET AL: "Ruthenium complexes in hydrosilylation reactions of unsaturated compounds" ZHURNAL OBSHCHEI KHIMII, vol. 63, no. 4, 1993, pages 863-868, XP009092352 ISSN: 0044-460X

## Description

The subject of the invention are new method of synthesis silylsubstituted 1,2-alkynes of the general formula 1.

The silylsubstituted 1,2-alkynes of the general formula 1 are compounds to be known of their general wide application and there are many scientific reports on the variety of constitution (e.g. Maruyama, Y.; Yamamura, K.; Nakayama, I.; Yoshiuchi, K.; Ozawa, F. J. Am. Chem. Soc. 1998, 120, 1421-1429*;* Nishihara, Y.; Ikegashira, K.; Hirabayashi, K.; Ando, J.; Mori, A.; Hiyama, T. J. Org. Chem. 2000, 65, 1780-1787; Jun, Ch-H.; Crabtree, R. H. J. Organomet. Chem. 1993, 447, 177-187; West, R.; Quass, L. C. J. Organomet. Chem. 1969, 18, 55-67; Lettan II, R. B.; Scheidt, K. A. Org. Lett. 2005, 7, 3227-3230; Ikeda, Z.; Oshima, K.; Matsubara, S. Org. Lett. 2005, 7, 4859-4861; Fleming, I.; Mwaniki, J. M. J. Chem. Soc., Perkin. Trans. 1, 1998, 7, 1237-1248*;* Voronkov, M. G.; Yarosh, O. G.; Shchukina, L. V.; Bumashova, T. D. Bull. Acad. Sci. USSR. Div. Chem. Sci. 1978, 27, 1894-1896)

A few methods of synthesis of silylsubstituted 1,2 -alkynes have been hitherto proposed and used.

The most often used is the reaction of chlorosubstituted silanes with lithium- or magnesium substituted alkynes (Baba, T.; Kato, A.; Takahanashi, H.; Toriyama, F.; Handa, H.; Ono, Y.; Sugisawa, H. J. Catal. 1998, 176, 488-494; Brandsma, L.; Verkruijsse, H.D. Synthesis, 1999, 1727-1728; Anderson, J. C.; Whiting M. J. Org. Chem. 2003, 68, 6160-6163; Mori, A.; Hishida, T.; Soga, Y.; Kawakami, Y Chem. Lett. 1995, 2, 107-108) or reaction of tetrachloroethylene with chlorosilane in the presence of lithium at -78°C (West, R.; Quass, L. C. J. Organomet. Chem. 1969, 18, 55-67;) or the reaction of bromomagnesium derivatives of trialkylsilylethyn with tetraalkoxylsilane (Voronkov, M. G.; Yarosh, O. G.; Shchukina, L. V. Bull. Acad. Sci. USSR. Div. Chem. Sci. 1982, 31, 1908-1910) or via reaction of sodium or magnesium substituted silylalkynes with chlorosilanes (Voronkov, M. G.; Yarosh. O. G.; Burnashova, T. D.; Misyunas, V. K.; Tsvetaeva, L. V. J. Gen. Chem. USSR 1975, 45, 2592-2594), also in the presents of palladium complexes (Yang, L.-M.; Huang, L.-F.; Luh, T.-Y. Org. Lett. 2004, 6, 1461-1463). Another very popular method of synthesis of silylsubstituted 1,2 -alkynes is the Sonogashira reaction of silylsubstituted terminal alkynes with alkyl or aryl halides the presence of palladium complexes in triethylamine (Sonogashira, K.; Tohda, Y.; Hagihara, N. Tetrahedron Lett. 1975, 4467; Takahashi, S.; Kuroyama, Y.; Sonogashira, K.; Hagihara, N. Synthesis, 1980, 627; Uenishi, J.; Matsui, K. Tetrahedron Lett. 2001, 42, 4353-4355). The direct methods of synthesis of silylsubstituted 1,2 -alkynes include: direct silylation of terminal alkynes with aminosilanes in the presence of zinc halides in 1,4-dioxane (Anreev, A.A.; Konshin, V.V.; Komarov, N.V.; Rubin, M.; Brouwer, Ch.; Gevorgyan, V. Org. Lett. 2004, 6, 421-424), and direct silylation of terminal alkynes with chlorosilanes in the presence of zinc dust or zinc complexes (Sugita, H.; Hatanaka, Y.; Hiyama, T. Tetrahedron Lett. 1995, 36, 2769-2772*;* Jiang, H.; Zhu, S. Tetrahedron Lett. 2005, 46, 517-519). The reaction of propargylic derivative with silylzincates is known to produce silylsubstituted alkynes (Harada, T.; Katsuhira, T.; Osada, A.; Iwazaki, K.; Maejika, K.; Oku, A. J. Am. Chem. Soc. 1996, 118, 11377-11390). Another method of synthesis of silylsubstituted 1,2 -alkynes is the reaction of terminal silylsubstituted alkynes with disulfides in the presence of rhodium complexes in acetone (Arisawa, M.; Fujimoto, K.; Morinaka, S.; Yamaguchi, M. J. Am. Chem. Soc. 2005, 127, 12226-12227). There are also scientific reports on synthesis of alkynylsybstituted silatranes where 1,2-silylsubstituted acetylene bond is present in reaction of alkynyltrialkoxylsilane with triethanolamine (Voronkov, M. G.; YArosh, O. G.; Shchukina, L. V.; Tsetlina, E. O.; Tandura, S. N.; Korotaeva, I. M. J. Gen. Chem. USSR 1979, 49, 536-538). The relevant compounds can be also obtained by modification of silylsubstituted 1,2-alkynes by metathesis over a molybdenum catalyst (Furstner, A.; Mathes, Ch. Org. Lett. 2001, 3, 221-223), or over palladium catalysts with addition of copper or silver halides (Chen, L.; Li, Ch.-J. Tetrahedron Lett. 2004, 45, 2771-2774; Halbes, U.; Pale, P. Tetrahedron Lett. 2002, 43, 2039-2042) or in addition of phosphines (Trost, B.M.; McIntosh, M.C. Tetrahedron Lett. 1997, 38, 3207-3210; Trost, B.M.; Sorum, M.T.; Chan, Ch.; Harms, A.E.; Rühter, G. J. Am. Chem. Soc. 1997, 119, 698-708), or in the presence of ruthenium catalysts (Yi, Ch.S.; Liu, N. Organometallics 1998, 17, 3158-3160) or cesium fluorides and crown ethers (Lukevics, E.; Rubia, K.; Abele, E.; Fleisher, M.; Arsenyan, P.; Grinberga, S.; Popelis, J. J. Organomet. Chem. 2001, 634, 69-73) or during the transformation of trimethoxysubstituted silanes in ethanol in the presence of 4-methylbenzenesulfonic acid (Voronkov, M. G.; Yarosh, O. G.; Shchukina, L. V.; Burnashova, T. D. Bull. Acad. Sci. USSR. Div. Chem. Sci. 1978, 27, 1894-1896). The silylsubstituted alkynes can be also obtain via dehydrocondensation of amino-, alkoxyl-, alkylalkoxylsilane in the presence of rhodium or ruthenium complexes (US 4 668 812). They also have been synthesized by dehydrogenating silylation of terminal alkynes with silanes in the presence of iridium complexes (Fernandez, M.J.; Oro, A.J. J. Mol. Catal. 1988, 45, 7-15; Esteruelas, M.A.; Nürnberg, 0.; Oliván, M.; Oro, L.A. Organometallics 1993, 12, 3264-3272; Shimizu, R.; Fuchikami, T. Tetrahedron Lett. 2000, 41, 907-910; Jun, Ch-H.; Crabtree, R. H. J. Organomet. Chem. 1993, 447, 177-187) or in the presence of ruthenium complexes (Maruyama, Y.; Yamamura, K.; Nakayama, I.; Yoshiuchi, K.; Ozawa, F. J. Am. Chem. Soc. 1998, 120, 1421-1429) or during hydrosilylation of phenylacetylene with silanes ( Lebedev, V. N.; Balagurova, E. V.; Dolgushin, F. M.; Yanovskii, A. I.; Zakharkin, L. I. Russian Chem. Bull. 1997, 46, 550-558) or ytterbium complexes (Takaki, K.; Kurioka, M.; Kamata, T.; Takehira, K.; Makioka, Y.; Fujiwara, Y. J. Org. Chem. 1998, 63, 9265-9269) or lithium or barium compounds (Ishikawa, J.; Itoh, M. J. Catal. 1999, 185, 454-461; Itoh, M.; Kobayashi, M.; Ishikawa, J. Organometallics 1997, 16, 3068-3070). Another method of synthesis of silylsubstituted 1,2 -alkynes is light initiated intermolecular rearrangement of diazosilyl(cyclopropenyl)methane derivatives (Maier, G.; Wolf, R.; Kalinowski, H.-O.; Boese, R Chem. Ber. 1994, 127, 191-200). The silylsubstituted 1,2 -alkynes have been also synthesized by thermal desulfinylation of 2-trialkylsilylvinylsulfoxides (Nakamura, S.; Kusuda, A.; Kawamura, K. Toru, T. J. Org. Chem. 2002, 67, 640-647) or dehydration of acyl silanes by way of its enol triflate (Fleming, I; Mwaniki, J. M. J. Chem. Soc., Perkin. Trans. 1, 1998, 7, 1237-1248).

The silylsubstituted 1,2-alkynes obtained by the above-mentioned methods of synthesis contain considerable amounts of side products, which decreases the yield of the pure target product.

The subject matter of the invention is a new way of synthesis of silylsubstituted 1,2-alkynes of general formula 1, 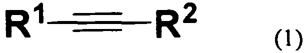 in which R¹ stands for a trialkoxysilyl group, methylbis(trimethylsiloxy)silyl group, dimethyl(trimethylsiloxy)silyl group or phenyldimethylsilyl group, while R² stands for alkyl, tertbutyl, cycloalkyl, trialkylsilyl group with all alkyl substituents the same, 1-trimethylsiloxycycloalkyl group, phenyldimethylsilyl group, tertbutyldimethylsilyl group, 1-trimetylsiloxyalkyl group or 1-alkoxyalkyl group, in which an alkene of general formula 2, 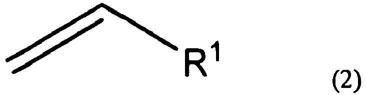 with R¹ specified above is subjected to silylative coupling with a terminal alkynes of the general formula 3, 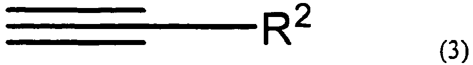 with R² specified above, in the presence of a catalyst.

According to the invention the reaction is conducted in temperatures from the range 100-130°C, possibly in the presence of a solvent, in particular hydrocarbon or aromatic solvent, preferably toluene, in a neutral gas atmosphere.

In the first version of the synthesis method proposed in the invention the catalyst is the compound of general formula 4,

**[RuH(CO)(CH₃CN)₂(PR³₃)₂]⁺[BF₄]⁻** **(4)**

in which R³ stands for a cyclohexyl or isopropyl group

In the second version of the synthesis method proposed in the invention the catalyst iodotris(triphenylphosphine)rhodium (I) of formula 5.

**{Rhl[P(C₆H₅)₃]₃}** **(5)**

In the third version of the synthesis method proposed in the invention the catalyst is di- di-µ-iodobis(1,5-cyclooctadiene)dirhodium (I) of formula 6.

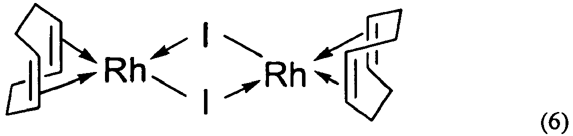

In the fourth version of the synthesis method proposed in the invention the catalyst is jest dodecacarbonyltriruthenium (0) of formula 7.

**[Ru₃(CO)₁₂]** **(7)**

In contrast to the hitherto proposed solutions, the method of synthesis according to the invention permits obtaining silylsubstituted 1,2-alkynes of general formula 1, with R¹, R², as specified above, in high yields in a single-step process and with a considerable reduction of formation of side products relative to their formation in the majority of the hitherto known processes. Another advantage of the method of synthesis proposed in the invention is the use of a low amount of ruthenium complex 0.01 - 2% molar ratio.

Silylsubstituted alkynes have a number of applications in organic synthesis (Kawanami, Y.; Katsuki, T.; Yamaguchi, M. Tetrahedron Lett. 1983, 24, 5131-5132; Greene, T.W.; Wuts, P.G.M. Protective Groups in Organic Synthesis, Wiley, New York, 1999; Saeeng, R.; Sirion, U.; Sahakitpichan, P.; Isobe, M. Tetrahedron Lett. 2003, 44, 6211-6215; Anderson, J.C.; Munday, R.H.. J. Org. Chem. 2004, 69, 8971-8974; Lettan II, R.B.; Scheidt, K.A. Org. Lett. 2005, 7, 3227-3230). They are used in different processes as e.g. in metathesis of alkynes (Fürstner, A.; Mathes, Ch. Org. Lett. 2001, 3, 221-223; Brizius, G.; Bunz, U.H.F. Org. Lett. 2002, 4, 2829-2831), or in synthesis of compounds being potential insecticides (Palmer, C.J.; Casida, J.E. J. Agric. Food Chem. 1989, 37, 213-316; Palmer, C.J.; Smith, I.H.; Moss, M.D.V.; Casida, J.E. J. Agric. Food Chem. 1990, 38, 1091-1093; Palmer, C.J.; Cole, L.M; Smith, I.H.; Moss, M.D.V.; Casida, J.E. J. Agric. Food Chem. 1991, 39, 1335-1341).

The method of synthesis is illustrated by the few examples given below. The structure of the new silylsubstituted 1,2-alkynes has been confirmed by GC-MS and NMR spectroscopy.

### Example I

In a reactor equipped with a reflux and a stirrer, in argon atmosphere, a portion of 0.07g of carbonylchlorohydridobis(tricyclohexylphosphine)ruthenium (II) was placed, to which 14mL of toluene, 3.5mL of dimethylphenylvinylsilane and 1.7mL triethylsilylethyne were subsequently added. The reaction mixture was heated for 24 hours at 120°C. The catalysts were removed from the raw product on a chromatographic column filled with silica and then the product was distilled. The compound obtained was 1-dimethylphenylsilyl-2-(triethylsilyl)ethyne in the yield of 94% of the pure product and 100% yield of the raw product.
Results of the GCMS analysis: m/z (%): 274 (23) [M⁺], 259 (34), 246 (100), 218 (89), 189 (68), 159 (12), 145 (13), 135 (34), 105 (36), 91 (10), 58 (14), 53 (18)
Spectroscopic characterization of the product:
¹H NMR (CDCl₃) δ (ppm): 0.42 (s,CH₃SiC≡); 0.63-0.68 (tr, CH₃CH₂SiC≡); 1.00-1.05 (qu, CH₃CH₂SiC≡); 7.39-7.40 (m, C₆H₅SiC≡)
¹³C NMR (CDCl₃) 8 (ppm): -0.68 (CH₃SiC≡); 4.49 (CH₃CH₂SiC≡); 7.44 (CH₃CH₂SiC≡); 113.57, 112.81 (C=C); 127.79-137.11 (C₆H₅SiC≡)
²⁹Si NMR (CDCl₃) δ (ppm): -20.07; -19.10

### Example II

As in example I, 4.0mL of dimethylphenylvinylsilane were reacted with 1.8mL of tertbutyldimethylsilylethyne in the presence of 10.2mL of toluene and 0.07g of carbonylchlorohydridobis(tricyclohexylphosphine)ruthenium (II). The compound obtained was 1-dimethylphenylsilyl-2-(tertbutyldimethylsilyl)ethyne in the yield of 70% of the pure product and 77% yield of the raw product.
Results of GCMS analysis: *m*/*z* (%): 274 (47) [M⁺], 259 (74), 218 (100), 157 (39), 135 (46), 105 (11), 74 (69), 53 (16)
Spectroscopic characterisation of the product:
¹H NMR (CDCl₃) δ (ppm): 0.16 (s, CH₃((CH₃)₃C)SiC≡); 0.43 (s, CH₃(C₆H₅)SiC≡); 0.98 (s, CH₃((CH₃)₃C)SiC≡); 7.37-7.68 (m, C₆H₅SiC≡)
¹³C NMR (CDCl₃) δ (ppm): -4.54 (CH₃((CH₃)₃C)SiC≡); -0.59 (CH₃(C₆H₅)SiC≡); 16.62 (CH₃((CH₃)₃C)SiC≡); 26.13 (CH₃((CH₃)₃C)SiC≡); 112.07, 114.40 (C=C); 127.07-136.91 (C₆H₅SiC≡)
²⁹Si NMR (CDCl₃) δ (ppm): -20.06; -5.95

### Example III

As in example I, 8.8mL of dimethylphenylvinylsilane were reacted with 1.2mL of 3,3-dimethyl-1-butyne in the presence of 0.07 g of
carbonylchlorohydridobis(tricyclohexylphosphine)ruthenium (II) and 9.3mL of toluene. The compound obtained was 3,3-dimethyl-1-(dimethylphenylsilyl)-1-butyne in the yield of 90% of the pure product and 100% yield of the raw product.
Results of GCMS analysis: m/z (%): 216 (21) [M⁺], 201 (100), 185 (5), 159 (33), 135 (6), 105 (9)
Spectroscopic characterization of the product:
¹H NMR (CDCl₃) δ (ppm): 0.36 (s, (CH₃)₂Si); 1.25 (s, (CH₃)₃C); 7.37-7.68 (m, C₆H₅SiC≡)
¹³C NMR (CDCl₃) δ (ppm): -0.59 (CH₃(C₆H₅)SiC≡); 16.62 (CH₃((CH₃)₃C)SiC≡); 29.01 ((CH₃)₃C); 30.82 ((CH₃)₃C); 112.07, 88.40 (C≡C); 127.07-136.91 (C₆H₅SiC≡)

### Example IV

As in example I, 3.8mL of dimethylphenylvinylsilane were reacted with 0.9mL ethynylcyclohexane in the presence of 0.07g of iodotris(triphenylphosphine)rhodium (I) at 100°C. The compound obtained was (dimethylphenylsilylethynyl)cyclohexane in the yield of 65% of the pure product and 100% yield of the raw product.
Results of GCMS analysis: m/z (%): 227 (100) [M⁺-CH₃], 163 (12), 145 (31), 121 (8), 105 (10), 78 (7), 53 (7)
Spectroscopic characterization of the product:
¹H NMR (CDCl₃) δ (ppm): 0.38 (s, CH₃Si); 1.2-2.4 (m, C₆H₁₁); 7.33-7.68 (m, C₅H₅)
¹³C NMR (CDCl₃) δ (ppm): 0.3 (CH₃Si); 24.8-32.6 (C₆H¹¹); 81.6, 113.7 (C≡C); 127.6-137.8 (C₅H₅)
²⁹Si NMR (CDCl₃) δ (ppm): -20.02

### Example V

As in example I 7.9mL dimethylphenylvinylsilane were reacted with 0.95mL 1-heptyne in the presence of 0.07g carbonylchlorohydridobis(tricyclohexylphosphine)ruthenium (II) and 5.55mL of toluene. The compound obtained was 1-(dimethylphenylsilyl)-1-heptyne in the yield of 95% of the pure product and 100% yield of the raw product.
Results of the GCMS analysis m/z (%): 215 (100) [M⁺- CH₃], 174 (28), 159 (21), 145 (25), 135 (14), 121 (30), 105 (14), 53 (10)
Spectroscopic characterization of the product:
¹H NMR (CDCl₃) δ (ppm): 0.09 (s, CH₃Si); 0.33-2.30 (m, C₅H₁₁); 7.36-7.66 (m, C₅H₅)
¹³C NMR (CDCl₃) δ (ppm): -0.4 (CH₃Si); 14.0-31.1 (C₅H₁₁); 82.1, 109.6 (C≡C); 127.6-137.7 (C₅H₅)
²⁹Si NMR (CDCl₃) δ (ppm): -20.09

### Example VI

As in example I, 4.38mL of dimethylphenylvinylsilane were reacted with 0.62mL of ethynylcyclohexane in the presence of 4.64mL of toluene and 0.07g of carbonylchlorohydridobis(tricyclohexylphosphine)ruthenium (II). The compound obtained was (dimethylphenylsilylethynyl)cyclohexane in the yield of 60% of pure product and 67% of raw product. The product characteristic is as in example IV.

### Example VII

As in example I, 5.65mL of dimethylphenylvinylsilane were reacted with 1.85mL of triethylsilylethyne in the presence of 0.07g di-µ-iodobis(1,5-cyclooctadiene)dirhodium (I) at 130°C. The compound obtained was 1-dimethylphenylsilyl-2-(triethylsilyl)ethyne in the yield of 70% of pure product and 90% of raw product. The product characteristic is as in example I.

### Example VIII

As in example I 5.65mL dimethylphenylvinylsilane were reacted with 1.38mL dimethylphenylsilylethyne in the presence of argon 0.07g di-µ-iodobis(1,5-cyclooctadiene)dirhodium (I) at 130°C. The compound obtained was 1,2-bis(dimethylphenylsilyl)ethyne in the yield of 80% of the pure product and 100% of raw product.
Results of the GCMS analysis m/z (%): 294 (9) [M⁺], 279 (100) [M⁺- CH₃], 263 (2), 219 (10), 159 (4), 135 (13), 105 (10), 91 (5), 73 (3), 53 (5)
Spectroscopic characterization of the product:
¹H NMR (CDCl₃) δ (ppm): 0.37 (s,CH₃SiC≡); 7.37-7.40 (m, C₆H₅SiC≡)
¹³C NMR (CDCl₃) δ (ppm): -0.68 (CH₃SiC≡);113.81 (C=C); 127.80-136.80 (C₆H₅SiC≡)

### Example IX

As in example I 3.76mL dimethylphenylvinylsilane were reacted with 0.92mL dimethylphenylsilylethyne in the presence of 0.07g iodotris(triphenylphosphine)rhodium (I) at 100°C. The compound obtained was 1,2-bis(dimethylphenylsilyl)ethyne in the yield of 60% of the pure product and 100% of raw product. The product characteristic is as in example VIII.

### Example X

As in example I 5.65mL dimethylphenylvinylsilane were reacted with 1.35mL 1-heptyne in the presence of 0.07g di-µ-iodobis(1,5-cyclooctadiene)dirhodium (I) at 130°C. The compound obtained was 1-dimethylphenylsityl-1-heptyne in the yield of 65% of the pure product and 80% of raw product. The product characteristic is as in example V.

### Example XI

As in example I 5.65mL dimethylphenylvinylsilane were reacted with 1.33mL ethynylcyclohexane in the presence of 0.07g di-µ-iodobis(1,5-cyclooctadiene)dirhodium (I) at 130°C. The compound obtained was (dimethylphenylsilylethynyl)cyclohexane in the yield of 60% of the pure product and 100% of raw product. The product characteristic is as in example IV.

### Example XII

As in example I 5.65mL dimethylphenylvinylsilane were reacted with 2.32mL triisopropylsilylethyne in the presence of 0.07g di-µ-iodobis(1,5-cyclooctadiene)dirhodium (I) at 130°C. The compound obtained was 1-triisopropylsilyl-2-(dimethylphenylsilyl)ethyne in the yield of 95% of the pure product and 100% of raw product.
Results of the GCMS analysis m/z (%):301 (21) [M⁺- CH₃], 273 (100), 246 (22), 232 (50), 203 (8), 157 (28), 135 (29), 105 (8), 91 (3), 73 (14)
Spectroscopic characterization of the product:
¹H NMR (CDCl₃) δ (ppm): 0.40 (s,CH₃SiC≡); 1.06-1.2 (m, (CH₃)₂CH); 7.37-7.40 (m, C₆H₅SiC≡)
¹³C NMR (CDCl₃) δ (ppm): -2.16 (CH₃Si); -0.68 (CH₃SiC≡); 11.24 ((CH₃)₂CHSi); 18.70 ((CH₃)₂CHSi);110.1, 113.81 (C=C); 127.80-136.80 (C₆H₅SiC≡)

### Example XIII

As in example I 4.45mL dimethylphenylvinylsilane were reacted with 1.46mL triethylsilylethyne in the presence of 10.42mL dichloromethane, and 0.07g diacetonitrilecarbonylhydridobis(tricyclohexylphosphine)ruthenium (II) tetrafluoroborate at 100°C. The compound obtained was 1-dimethylphenyisilyl-2-(triethylsilyl)ethyne in the yield of 40% of the pure product and 43% of raw product. The product characteristic is as in example I.

### Example XIV

As in example I 3.44mL dimethylphenylvinylsilane were reacted with 1.47mL triethylsilylethyne in the presence of 0.07g dodecacarbonyltriruthenium (0) and 11.5mL of toluene at 120°C. The compound obtained was 1-dimethylphenylsilyl-2-(triethylsilyl)ethyne in the yield of 10% of the pure product and 20% of raw product. The product characteristic is as in example I.

### Example XV

In a reactor equipped with a reflux and a stirrer, in argon atmosphere, a portion of 0.07g of carbonylchlorohydridobis(tricyclohexylphosphine)ruthenium (II) was placed, to which 11.9mL of toluene, 5.5mL ofdimethylphenylvinylsilane and 1.9mL 1-ethynyl-1-(trimethylsiloxy)cyclohexane were subsequently added. The reaction mixture was heated for 24 hours at 110°C. The catalyst was removed from the raw product on a chromatographic column filled with silica modified with 15% wt. Et₃N and then the product was distilled. The compound obtained was 1-dimethylphenylsilylethynyl-1-(trimethylsiloxy)cyclohexane in the yield of 88% of the pure product and 93% of raw product.
Results of the GCMS analysis m/z (%): 315 (47) [N4⁺- CH₃], 287 (44), 242 (12), 196 (15), 171 (100), 159 (14), 147 (42); 133 (38), 73 (22), 45 (22)
Spectroscopic characterization of the product:
¹H NMR (CDCl₃) δ (ppm): 0.18 (s,CH₃SiO); 0.42 (s, CH₃(C₆H₅)SiC≡); 1.55-1.91 (m, (C₆H₁₀)C≡); 7.37-7.66 (m, (C₆H₅)SiC≡)
¹³C NMR (CDCl₃) δ (ppm): -0.85 (CH₃(C₆H₅)SiC≡; 2.08 (CH₃SiO); 21.39-70.26 ((C₆H₁₀)C≡); 87.49, 111.96 (C=C); 127.81-137.13 ((C₆H₅)SiC≡)
²⁹Si NMR (CDCl₃) δ (ppm): -19.38; 16.00

### Example XVI

As in example XV 3.8mL dimethylphenylvinylsilane were reacted with 1.4mL 1-ethynyl-1-(trimethylsiloxy)cyclohexane in the presence of 0.07g iodotris(triphenylphosphine)rhodium (I) at 100°C. The compound obtained was 1-dimethylphenylsilylethynyl-1-(trimethylsiloxy)cyclohexane in the yield of 78% of the pure product and 100% of raw product. The product characteristic is as in example XVIII.

### Example XVII

As in example XV 5.3mL dimethylphenylvinylsilane were reacted with 2.8mL 1-ethynyl-1-(trimethylsiloxy)cyclohexane in the presence of 0.07 g carbonylchlorohydridobis(triisopropylphosphine)ruthenium (II) and 20.7mL of toluene , at 100°C. The compound obtained was 1-dimethylphenylsilylethynyl-1-(trimethylsiloxy)cyclohexane in the yield of 89% of the pure product and 93% of raw product. The product characteristic is as in example XV.

### Example XVIII

As in example XV 5.26mL dimethylphenylvinylsilane were reacted with 1.35mL 3-methyl-3-ethoxy-1-pentyne in the presence of 12.69mL of toluene and 0.07g carbonylchlorohydridobis(tricyclohexylphosphine)ruthenium (II) at 120°C. The compound obtained was 3-methyl-3-ethoxy-1-(dimethylphenylsilyl)-1-pentyne in the yield of 50% of the pure product and 63% of raw product.
Results of the GCMS analysis m/z (%): 245 (5) [M⁺- CH₃], 231 (100), 187 (10), 159 (18), 145 (12), 125 (37), 83 (12), 75 (19)
Spectroscopic characterization of the product:
¹H NMR (CDCl₃) δ (ppm):0.40 (s, CH₃Si); 0.97-1.02 (tr, CH₃CH₂C); 1.18-1.22 (tr, CH₃CH₂O); 1.41 (s, CH₃C); 1.69-1.74 (qu, CH₃CH₂C); 3.59-3.63 (qu, CH₃CH₂O); 7.36-7.65 (m, C₅H₅si)
¹³C NMR (CDCl₃) δ (ppm): -0.52,1.15 (CH₃Si); 8.78 (CH₃CH₂C); 15.90 (CH₃CH₂O); 25.84 (CH₃C); 34.29 (CH₃CH₂C); 59.29 (CH₃CH₂O); 73.86 (CH₃C); 86.78, 109.52 (C≡C); 127.71-137.19 (C₅H₅Si)
²⁹Si NMR (CDCl₃) δ (ppm): -19.10

### Example XIX

As in example XV 7.0mL dimethylphenylvinylsilane were reacted with 2.3mL 3-methyl-3-trimethylsiloxy-1-pentyne in the presence of 9.96mL of toluene and 0.07g carbonylchlorohydridobis(tricyclohexylphosphine)ruthenium (II) at 120°C. The compound obtained was 3-methyl-3-trimethylsiloxy-1-(dimethylphenylsilyl)-1-pentyne in the yield of 90% of the pure product and 92% of raw product.
Results of the GCMS analysis m/z (%): 289 (14) [M⁺- CH₃], 275 (100), 145 (8), 135 (18), 133 (33), 73 (17)
Spectroscopic characterization of the product:
¹H NMR (CDCl₃) δ (ppm):0.09 (s, CH₃SiO); 0.18 (s, CH₃PhSi); 0.98-1.01 (tr, CH₃CH₂); 1.46 (s, CH₃C); 1.64-1.69 (m, CH₃CH₂); 7.37-7.65 (m, C₅H₅Si)
¹³NMR (CDCl₃) δ (ppm): 1.16 (CH₃Si); 2.04 (CH₃SiO); 9.16 (CH₃CH₂); 30.80 (CH₃C); 37.9 (CH₃CH₂); 70.24 (CH₃C); 86.33, 111.78 (C≡C); 127.72-136.913 (C₅H₅Si)
²⁹Si NMR (CDCl₃) δ (ppm): -19.15; 16.18

### Example XX

As in example XV 11.76mL dimethyl(trimethylsiloxy)vinylsilane were reacted with 2.3mL 3-methyl-3-trimethylsiloxy-1-pentyne in the presence of 5.24mL of toluene and 0.07g carbonylchlorohydridobis(tricyclohexylphosphine)ruthenium (II) (9.65x10⁻⁵ mol) at 120°C. The compound obtained was 3-methyl-3-trimethylsiloxy-1-(dimethyl(trimethylsiloxy)silyl)-1-pentyne in the yield of 85% of the pure product and 90% of raw product.
Results of the GCMS analysis m/z (%): 301 (26) [M⁺- CH₃], 287 (100), 221 (14), 147 (32), 73 (22)
Spectroscopic characterization of the product:
¹H NMR (CDCl₃) δ (ppm):0.11 (CH₃Si); 0.18-0.20 (s, CH₃SiO); 0.95-0.99 (tr, CH₃CH₂); 1.41 (s, CH₃C); 1.60-1.64 (m, CH₃CH₂)
¹³C NMR (CDCl₃) δ (ppm): 1.16 (CH₃Si); 1.9-2.3 (CH₃SiO); 9.09 (CH₃CH₂); 30.64 (CH₃C); 37.8 (CH₃CH₂); 70.05 (CH₃C); 88.31, 108.55 (C≡C)
²⁹Si NMR (CDCl₃) δ (ppm): -16.74; 12.49; 16.02

### Example XXI

As in example XV 8.55mL dimethyl(trimethylsiloxy)vinylsilane were reacted with 1.76mL 1-ethynyl-1-(trimethylsiloxy)cyclohexane in the presence of 8.96mL of toluene and 0.07g carbonylchlorohydridobis(tricyclohexylphosphine)ruthenium (II) at 120°C. The compound obtained was 1-dimethyl(trimethylsiloxy)silylethynyl-1-(trimethylsiloxy)cyclohexane in the yield of 90% of the pure product and 100% of raw product.
Results of the GCMS analysis m/z (%): 328 (100) [M+-CH₃], 314 (31), 300 (97), 222 (80), 108 (18), 195 (8), 171 (19), 147 (38), 74 (55), 45 (21)
Spectroscopic characterization of the product:
¹H NMR (CDCl₃) δ (ppm): 0.09-0.19 (s, CH₃SiO, CH₃Si); 1.21-2.12 (m, (C₆H₁₀)C≡);
¹³C NMR (CDCl₃) δ (ppm): 1.70 (CH₃Si); 2.07 (CH₃SiO); 23.07-70.03 ((C₆H₁₀)C≡); 89.20, 108.66 (C≡C)

### Example XXII

As in example XV 14.34mL methylbis(trimethylsiloxy)vinylsilane were reacted with 1.76mL 1-ethynyl-1-(trimethylsiloxy)cyclohexane in the presence of 2.9mL of toluene and 0.07g carbonylchlorohydridobis(tricyclohexylphosphine)ruthenium (II) at 120°C. The compound obtained was 1-methylbis(trimethylsiloxy)silylethynyl-1-(trimethylsiloxy)cyclohexane in the yield of 91% of the pure product and 100% of raw product.
Results of the GCMS analysis m/z (%): 401 (73) [M⁺-CH₃], 388 (14), 374 (47), 222 (100), 172 (15), 74 (24)
Spectroscopic characterization of the product:
¹H NMR (CDCl₃) δ (ppm): 0.07-0.19 (s, CH₃SiO, CH₃Si); 1.25-1.86 (m, (C₆H₁₀)C≡);
¹³C NMR (CDCl₃) δ (ppm): 1.03 (CH₃Si); 2.07 (CH₃SiO); 23.02-77.42 ((C₆H₁₀)C≡); 88.26, 106.47 (C≡C)

### Example XXIII

As in example XV 5.65mL dimethylphenylvinylsilane were reacted with 1.89mL 1-ethynyl-1-(trimethylsiloxy)cyclohexane in the presence of 0.07g di-µ-iodobis(1,5-cyclooctadiene)dirhodium (I) at 130°C. The compound obtained was 1-dimethylphenylsilylethynyl-1-(trimethylsiloxy)cyclohexane in the yield of 95% of the pure product and 100% of raw product. The product characteristic is as in example XV.

### Example XXIV

As in example XV 5.65mL dimethylphenylvinylsilane were reacted with 2.48mL 3-methyl-3-trimethylsiloxy-1-pentyne in the presence of 0.07g di-µ-iodobis(1,5-cyclooctadiene)dirhodium (I) at 130°C. The compound obtained was 3-methyl-3-trimethylsiloxy-1-(dimethylphenylsilyl)-1-pentyne in the yield of 90% of the pure product and 95% of raw product. The product characteristic is as in example XIX.

### Example XXV

As in example XV 3.76mL dimethylphenylvinylsilane were reacted with 1.65mL 3-methyl-3-trimethylsiloxy-1-pentyne in the presence of 0.07g iodotris(triphenylphosphine)rhodium (I) at 100°C. The compound obtained was 3-methyl-3-trimethylsiloxy-1-(dimethylphenylsilyl)-1-pentyne in the yield of 50% of the pure product and 65% of raw product. The product characteristic is as in example XIX.

### Example XXVI

As in example XV 6.5mL triethoxyvinylsilane were reacted with 1.89mL I-ethynyl-1-(trimethylsiloxy)cyclohexane in the presence of 0.07g di-µ-iodobis(1,5-cyclooctadiene)dirhodium (I) at 130°C. The compound obtained was 1-triethoxysilylethynyl-1-(trimethylsiloxy)cyclohexane in the yield of 95% of the pure product and 100% of raw product. Results of GCMS analysis: [M⁺] (m/z) = 358
Spectroscopic characterization of the product:
¹H NMR (CDCl₃) δ (ppm): 0.2 (s,CH₃SiOC≡); 1.22-1.27 (tr, CH₃CH₂OSi); 1.49-2.59 (m, (C₆H₁₀)-≡); 3.86-3.89 (qu, CH₃CH₂OSi)
¹³C NMR (CDCl₃) δ (ppm): 2.14 (CH₃SiOC≡); 18.13 (CH₃CH₂OSi); 58.96 (CH₃CH₂OSi); 23.14-70,09 ({C₆H₁₀}-≡); 81.24, 109.30 (C=C)

### Example XXVII

As in example XV 9.23mL methylbis(trimethylsiloxy)vinylsilane were reacted with 1.89mL 1-ethynyl-1-(trimethylsiloxy)cyclohexane in the presence of 0.07g di-µ-iodobis(1,5-cyclooctadiene)dirhodium (I) at 130°C. The compound obtained was 1-methylbis(trimethylsiloxy)silylethynyl-1-(trimethylsiloxy)cyclohexane in the yield of 80% of the pure product and 100% of raw product. The product characteristic is as in example XXII

### Example XXVIII

As in example XV 10.1 mL triethoxyvinylsilane were reacted with 1.7 mL triethylsilylethyne in the presence of 7.5mL of toluene and 0.07g carbonylchlorohydridobis(tricyclohexylphosphine)ruthenium (II) at 110°C. The compound obtained was 1-triethoxysilyl-2-(triethylsilyl)ethyne in the yield of 65% of the pure product and 90% of raw product.
Results of the GCMS analysis m/z = 302
Spectroscopic characterization of the product:
¹H NMR (CDCl₃) δ (ppm): 0.55-0.57 (qu, CH₃CH₂SiC≡); 0.94-0.98 (tr, CH₃CH₂SiC≡); 1.15-1.19 (tr, CH₃CH₂OSiC≡); 3.73-3.78 (qu, CH₃CH₂OSiC≡)
¹³C NMR (CDCl₃) δ (ppm): 3.25 (CH₃CH₂SiC≡); 7.53 (CH₃CH₂SiC≡); 18.57 (CH₃CH₂OSiC≡); 58.13 (CH₃CH₂OSiC≡); 84,86, 106,15 (C=C)

### Example XXIX

As in example XV 20.2 mL triethoxyvinylsilane were reacted with 1.2 mL 3,3-dimethyl-1-butyne in the presence of 6.3mL of toluene and 0.07g carbonylchlorohydridobis(tricyclohexylphosphine)ruthenium (II) at 100°C. The compound obtained was 3,3-dimethyl-1-(triethoxysilyl)-1-butyne in the yield of 85% of the pure product and 93% of raw product.
Results of the GCMS analysis m/z = 244
Spectroscopic characterization of the product:
¹H NMR (CDCl₃) δ (ppm): 3.86 (q, CH₃CH₂OSi); 1.26-1.24 (m, CH₃CH₂OSi, (CH₃)C)
¹³C NMR (CDCl₃) δ (ppm): 18.2 (CH₃CH₂OSi); 30.8 ((CH₃)C, CH₃CH₂OSi); 59.1 (CH₃CH₂OSi); 73.8, 115,9 (C=C)

### Example XXX

As in example XV 8.1 mL triethoxyvinylsilane were reacted with 1.9 mL 1-ethynyl-1-(trimethylsiloxy)cyclohexane in the presence of 9.3mL of toluene and 0.07g carbonylchlorohydridobis(tricyclohexylphosphine)ruthenium (II) at 110°C. The compound obtained was 1-triethoxysilylethynyl-1-(trimethylsiloxy)cyclohexane in the yield of 92% of the pure product and 100% of raw product. The product characteristic is as in example XXVI.

### Example XXXI

As in example XV 8.5 mL triethoxyvinylsilane were reacted with 1.6 mL 1-ethynyl-1-(trimethylsiloxy)cyclohexane in the presence of 0.07g diacetonitrilecarbonylhydridobis(tricyclohexylphosphine)ruthenium (II) tetrafluoroborate at 120°C. The compound obtained was 1-triethoxysilylethynyl-1-(trimethylsiloxy)cyclohexane in the yield of 95% of the pure product and 100% of raw product. The product characteristic is as in example XXVI.

### Example XXXII

As in example XV 11.8mL triethoxyvinylsilane were reacted with 2.2mL 1-ethynyl-1-(trimethylsiloxy)cyclohexane in the presence of 0.07g diacetonitrilecarbonylhydridobis(triisopropylphosphine)ruthenium (II) tetrafluoroborate at 120°C. The compound obtained was 1-triethoxysilylethynyl-1-(trimethylsiloxy)cyclohexane in the yield of 92% of the pure product and 98% of raw product. The product characteristic is as in example XXVI.

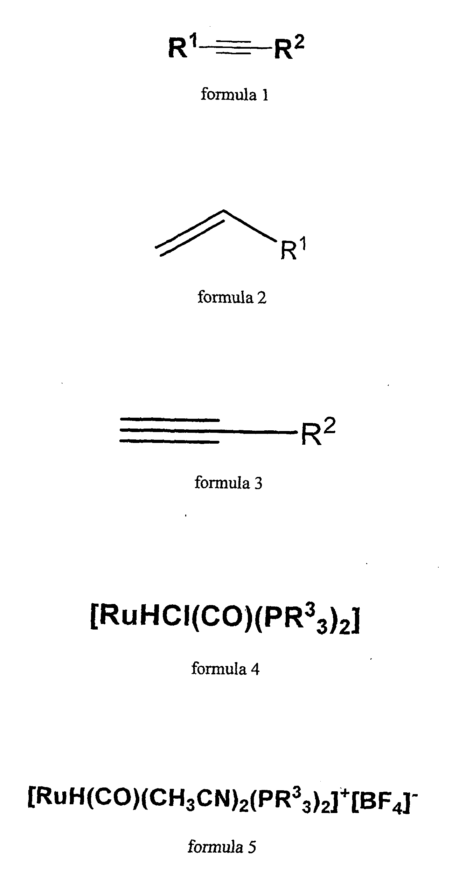

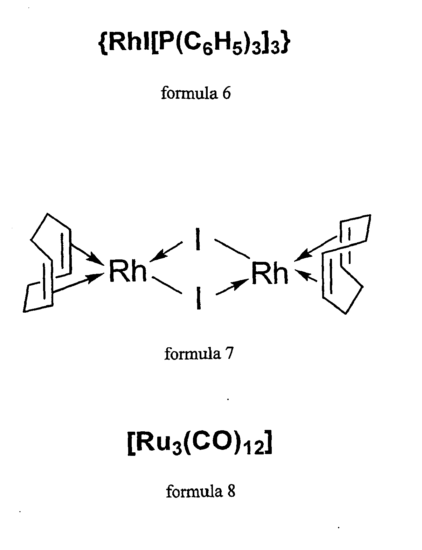

## Claims

1. The method of synthesis of silylsubstituted 1,2-alkynes of general formula 1, 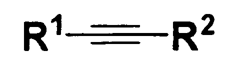 in which R¹ stands for a trialkoxylsilyl group, phenyldimethylsilyl group dimethyl(trimethylsiloxy)silyl group or methylbis(trimethylsiloxy)silyl group, while R² stands for alkyl, tertbutyl, cycloalkyl, 1-trimethylsiloxycycloalkyl group, phenyldimethylsilyl group, trialkylsilyl group, tertbutyldimethylsilyl group, 1-trimethyl-siloxalkyl group or 1-alkoxyalkyl group, in which process a relevant alkene of general formula 2 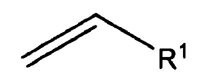 with R¹ specified as above is subjected to silylative coupling with a terminal alkyne of general formula 3 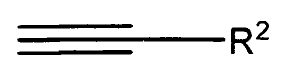 with R² specified as above, in the presence of a catalyst of general formula 5,
**[RuH(CO)(CH₃CN)₂(PR³₃)₂(⁺[BF₄]⁻**
with R³ standing for a isopropyl group; the reaction is conducted in temperatures from the range 100-130°C, possibly in an organic solvent, preferably a hydrocarbon or aromatic solvent, preferably in toluene, in a neutral gas atmosphere.

2. The method of synthesis of silylsubstituted 1,2-alkynes of general formula 1, 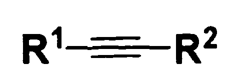 in which R¹ stands for a trialkoxylsilyl group, phenyldimethylsilyl group dimethyl(trimethylsiloxy)silyl group or methylbis(trimethylsiloxy)silyl group, while R² stands for alkyl, tertbutyl, cycloalkyl, 1-trimethylsiloxycycloalkyl group, phenyldimethylsilyl group, trialkylsilyl group, tertbutyldimethylsilyl group, 1-trimethyl-siloxyalkyl group or 1-alkoxyakyl group, in which process a relevant alkene of general formula 2 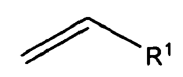 with R¹ specified as above is subjected to silylative coupling with a terminal alkyne of general formula 3, 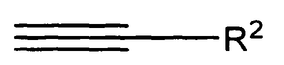 with R² specified as above in the presence of iodotris(triphenylphosphine)rhodium (I) of formula 6
**{Rhl[P(C₆H₅)₃]₃}**
as a catalyst; the reaction is conducted in temperatures from the range 100-130°C, possibly in an organic solvent, preferably a hydrocarbon or aromatic solvent, preferably in toluene, in a neutral gas atmosphere.

3. The method of synthesis of silylsubstituted 1,2-alkynes of general formula 1, 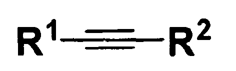 in which R¹ stands for a trialkoxylsilyl group, phenyldimethylsilyl group, dimethyl(trimethylsiloxy)silyl group or methylbis(trimethylsiloxy)silyl group, while R² stands for alkyl, tertbutyl, cycloalkyl, 1-trimethylsiloxycycloalkyl group, phenyldimethylsilyl group, trialkylsilyl group, tertbutyldimethylsilyl group, 1-trimethyl-siloxyalkyl group or 1-alkoxyalkyl group, in which process a relevant alkene of general formula 2, 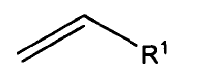 with R¹ specified as above, is subjected to silylative coupling with a terminal alkyne of general formula 3, 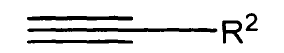 with R² specified as above, in the presence of di-µ-iodobis(1,5-cyclooctadiene)dirhodium (I) of formula 7 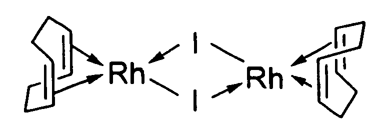 as a catalyst; the reaction is conducted in temperatures from the range 100-130°C, possibly in an organic solvent, preferably in a hydrocarbon or aromatic solvent, preferably in toluene, in a neutral gas atmosphere.

4. The method of synthesis of silylsubstituted 1,2-alkynes of general formula 1, 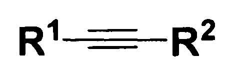 in which R¹ stands for a trialkoxysilyl group, phenyldimethylsilyl group, dimethyl(trimethylsiloxy)silyl group or metylbis(trimethylsiloxy)silyl group, while R² stands for alkyl, tertbutyl, cycloalkyl, a 1-trimethylsiloxycckloalkyl group, phenyldimethylsilyl group, trialkylsilyl group, tertbutyldimethylsilyl group, 1-trimethyl-siloxyalkyl group or 1-alkoxyalkyl group, in which process a relevant alkene of general formula 2 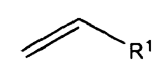 with R¹ specified as above is subjected to silylative coupling with a terminal alkyne of general formula 3, 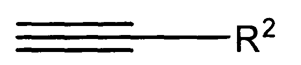 with R² specified as above, in the presence of dodecacarbonyltriruthenium(0) of formula 8
**[Ru₃(CO)₁₂]**
as a catalyst; the reaction is conducted in temperatures from the range 100-130°C, possibly in an organic solvent, preferably a hydrocarbon or aromatic solvent, preferably in toluene, in a neutral gas atmosphere.

## Patentansprüche

1. Gewinnungsart der 1,2-Alkyle, die einen Silyl-Gruppen-Ersatz beinhalten, mit der allgemeinen Formel 1, 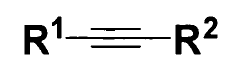 bei der R¹ für eine Trialkoxysilyl-, Dimethyl(phenyl)silyl-, Dimethyl(trimethyl-siloxy)silyl- oder Methylbis(trimethylsiloxy)silyl-Gruppe und R² für ein Alkyl, Tert-Butyl, Cykloalkyl, 1-(Trimethylsiloxy)cykloalkyl-, Dimethyl(phenyl)silyl-, Trialkoxysilyl-, 1-(Trimethylsiloxy)alkyl- oder 1-Alkoxyalkylgruppe stehen, **dadurch gekennzeichnet, dass** das entsprechende Alkyl mit der allgemeinen Formel 2, 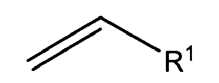 bei der R¹ die oben genannte Bedeutung trägt, einer Kupplungsreaktion unterzogen wird, bei der es zu einer Kupplung mit dem endständigen Alkyl der allgemeinen Formel 3 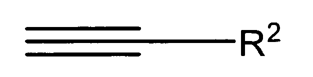 kommt, bei der R² die oben genannte Bedeutung trägt, und zwar in Anwesenheit eines Katalysators mit der allgemeinen Formel 5,
**[RuH(CO)(CH₃CN)₂(PR³₃)₂]⁺[BF₄]⁻**
bei der R³ für eine Isopropyl-Gruppe steht, wobei diese Reaktion in einem Temperaturbereich von 100-130°, eventuell in einem organischen Lösungsmittel, vorteilhaft einem Kohlenwasserstofflösungsmittel oder einem aromatischen Lösungsmittel, vorteilhaft Toluol, in Anwesenheit von Inertgas, herbeigeführt wird.

2. Gewinnungsart der 1,2- Alkyle, die einen Silyl-Gruppen-Ersatz beinhalten, mit der allgemeinen Formel 1, 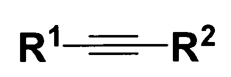 bei der R¹ für eine Trialkoxysilyl-, Dimethyl(phenyl)silyl-, Dimethyl(trimethyl-siloxy)silyl- oder Methylbis(trimethylsiloxy)silyl-Gruppe und R² für ein Alkyl, Tert-Butyl, Cykloalkyl, 1-(Trimethylsiloxy)cykloalkyl-, Dimethyl(phenyl)silyl-, Trialkoxysilyl-, Dimethyltertbutylsilyl-, 1-(Trimethylsiloxy)alkyl- oder 1-Alkoxyalkyl-Gruppe stehen, **dadurch gekennzeichnet, dass** das entsprechende Alkyl mit der allgemeinen Formel 2, 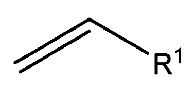 bei der R¹ die oben genannte Bedeutung trägt, einer Kupplungsreaktion unterzogen wird, bei der es zu einer Kupplung mit dem endständigen Alkyl der allgemeinen Formel 3 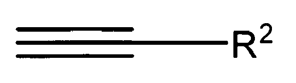 kommt, bei der R² die oben genannte Bedeutung trägt, und zwar in Anwesenheit von Iodotris(triphenylphosphine)rhodium(I) mit der Formel 6
**{Rhl[P(C₆H₅)₃]₃}**
als Katalysator, wobei diese Reaktion in einem Temperaturbereich von 100-130°, eventuell in einem organischen Lösungsmittel, vorteilhaft einem Kohlenwasserstofflösungsmittel oder einem aromatischen Lösungsmittel, vorteilhaft Toluol, in Anwesenheit von Inertgas, herbeigeführt wird.

3. Gewinnungsart der 1,2-Alkyle, die einen Silyl-Gruppen-Ersatz beinhalten, mit der allgemeinen Formel 1, 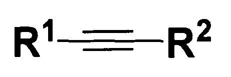 bei der R¹ für eine Trialkoxysilyl-, Dimethyl(phenyl)silyl-, Dimethyl(trimethyl-siloxy)silyl- oder Methylbis(trimethylsiloxy)silyl-Gruppe und R² für ein Alkyl, Tert-Butyl, Cykloalkyl, 1-(Trimethylsiloxy)cykloalkyl-, Dimethyl-(phenyl)silyl-, Trialkoxysilyl-, Dimethyltertbutylsilyl-, 1-(Trimethylsiloxy)alkyl- oder 1-Alkoxyalkyl-Gruppe stehen, **dadurch gekennzeichnet, dass** das entsprechende Alkyl mit der allgemeinen Formel 2, 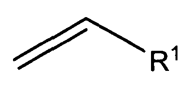 bei der R¹ die oben genannte Bedeutung trägt, einer Kupplungsreaktion unterzogen wird, bei der es zu einer Kupplung mit dem endständigen Alkyl der allgemeinen Formel 3 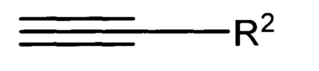 kommt, bei der R² die oben genannte Bedeutung trägt, und zwar in Anwesenheit von Di-µ-Iodobis(1,5-Cyklooktadien)Dirhodium(I) mit der Formel 7 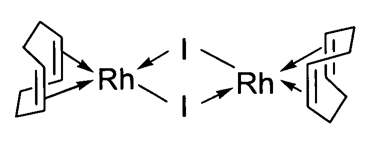 als Katalysator, wobei diese Reaktion in einem Temperaturbereich von 100-130°, eventuell in einem organischen Lösungsmittel, vorteilhaft einem Kohlenwasserstofflösungsmittel oder einem aromatischen Lösungsmittel, vorteilhaft Toluol, in Anwesenheit von Inertgas, herbeigeführt wird.

4. Gewinnungsart der 1,2-Alkyle, die einen Silyl-Gruppen-Ersatz beinhalten, mit der allgemeinen Formel 1, 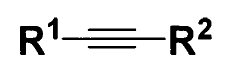 bei der R¹ für eine Trialkoxysilyl-, Dimethyl(phenyl)silyl-, Dimethyl(trimethyl-siloxy)silyl- oder Methylbis(trimethylsiloxy)silyl-Gruppe und R² für ein Alkyl, Tert-Butyl, Cykloalkyl, 1-(Trimethylsiloxy)cykloalkyl-, Dimethyl(phenyl)silyl-, Trialkoxysilyl-, Dimethyltertbutylsilyl-, 1-(Trimethylsiloxy)alkyl- oder 1-Alkoxyalkyl-Gruppe stehen, **dadurch gekennzeichnet, dass** das entsprechende Alkyl mit der allgemeinen Formel 2, 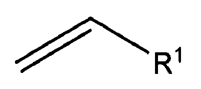 bei der R¹ die oben genannte Bedeutung trägt, einer Kupplungsreaktion unterzogen wird, bei der es zu einer Kupplung mit dem endständigen Alkyl der allgemeinen Formel 3 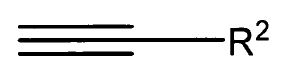 kommt, bei der R² die oben genannte Bedeutung trägt, und zwar in Anwesenheit von Triruthenium Dodecacarbonyl(0) mit der Formel 8
**[Ru₃(CO)₁₂]**
als Katalysator, wobei diese Reaktion in einem Temperaturbereich von 100-130°, eventuell in einem organischen Lösungsmittel, vorteilhaft einem Kohlenwasserstofflösungsmittel oder einem aromatischen Lösungsmittel, vorteilhaft Toluol, in Anwesenheit von Inertgas, herbeigeführt wird.

## Revendications

1. Méthode de synthèse de 1,2-alcynes substitués par le silyle, de la formule générale 1, 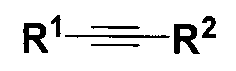 où R¹ désigne le groupe trialcoxysilyle, phényldiméthylsilyle, diméthyl(triméthylsiloxy)silyle ou méthylbis(triméthylsiloxy)silyle ; R² désigne l'alkyle, le tert-butyle, le cycloalkyle, le groupe 1-triméthylsiloxycycloalkyle, phényldiméthylsilyle, trialkylsilyle, 1-triméthylsiloxyalkyle ou 1-alcoxyalkyle, **caractérisée en ce que** l'alcène correspondant de la formule générale 2, 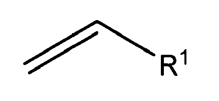 où R¹ a la signification telle que définie ci-dessus, est soumis à la réaction de couplage silylant avec un alcyne terminal de la formule générale 3, 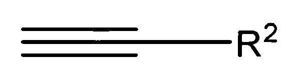 où R² a la signification telle que définie ci-dessus, en présence d'un catalyseur de la formule générale 5,
**[RuH(CO)(CH₃CN)₂(PR³₃)₂)⁺[BF₄]⁻**
où R³ désigne le groupe isopropyle, la réaction se produisant dans la plage de températures de 100 à 130°C, éventuellement dans un solvant organique, de préférence hydrocarboné ou aromatique, de préférence toluène, sous atmosphère inerte.

2. Méthode de synthèse de 1,2-alcynes substitués par le silyle, de la formule générale 1, 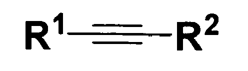 où R¹ désigne le groupe trialcoxysilyle, phényldiméthylsilyle, diméthyl(triméthylsiloxy)silyle ou méthylbis(triméthylsiloxy)silyle ; R² désigne l'alkyle, le tert-butyle, le cycloalkyle, le groupe 1-triméthylsiloxycycloalkyle, phényldiméthylsilyle, trialkylsilyle, diméthyl-tert-butylsilyle, 1-triméthylsiloxyalkyle ou 1-alcoxyalkyle, **caractérisée en ce que** l'alcène correspondant de la formule générale 2, 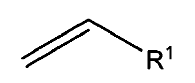 où R¹ a la signification telle que définie ci-dessus, est soumis à la réaction de couplage silylant avec un alcyne terminal de la formule générale 3, 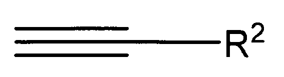 où R² a la signification telle que définie ci-dessus, en présence d'iodotris(triphénylphosphine)rhodium (I) de la formule 6
**{Rhl[P(C₆H₃)₃]₃}**
comme catalyseur, la réaction se produisant dans la plage de températures de 100 à 130°C, éventuellement dans un solvant organique, de préférence hydrocarboné ou aromatique, de préférence toluène, sous atmosphère inerte.

3. Méthode de synthèse de 1,2-alcynes substitués par le silyle, de la formule générale 1, 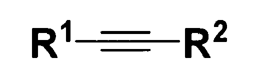 où R¹ désigne le groupe trialcoxysilyle, phényldiméthylsilyle, diméthyl(triméthylsiloxy)silyle ou méthylbis(triméthylsiloxy)silyle ; R² désigne l'alkyle, le tert-butyle, le cycloalkyle, le groupe 1-triméthylsiloxycycloalkyle, phényldiméthylsilyle, trialkylsilyle, diméthyl-tert-butylsilyle, 1-triméthylsiloxyalkyle ou 1-alcoxyalkyle, **caractérisée en ce que** l'alcène correspondant de la formule générale 2, 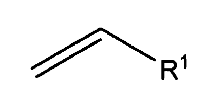 où R¹ a la signification telle que définie ci-dessus, est soumis à la réaction de couplage silylant avec un alcyne terminal de la formule générale 3, 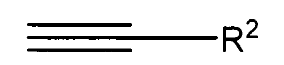 où R² a la signification telle que définie ci-dessus, en présence de di-µ-iodobis(1,5-cyclooctadiène)dirhodium (I) de la formule 7 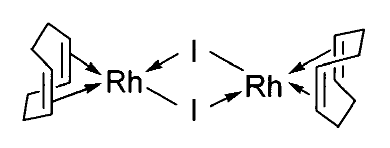 comme catalyseur, la réaction se produisant dans la plage de températures de 100 à 130°C, éventuellement dans un solvant organique, de préférence hydrocarboné ou aromatique, de préférence toluène, sous atmosphère inerte.

4. Méthode de synthèse de 1,2-alcynes substitués par le silyle, de la formule générale 1, 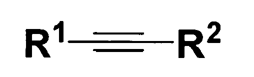 où R¹ désigne le groupe trialcoxysilyle, phényldiméthylsilyle, diméthyl(triméthylsiloxy)silyle ou méthylbis(triméthylsiloxy)silyle ; R² désigne l'alkyle, le tert-butyle, le cycloalkyle, le groupe 1-triméthylsiloxycycloalkyle, phényldiméthylsilyle, trialkylsilyle, diméthyl-tert-butylsilyle, 1-triméthylsiloxyalkyle ou 1-alcoxyalkyle, **caractérisée en ce que** l'alcène correspondant de la formule générale 2, 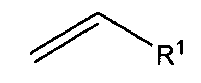 où R¹ a la signification telle que définie ci-dessus, est soumis à la réaction de couplage silylant avec un alcyne terminal de la formule générale 3, où R² a la signification telle que définie ci-dessus, en présence de dodécacarbonyltriruthénium (0) de la formule 8
**[RU₃(CO)₁₂]**
comme catalyseur, la réaction se produisant dans la plage de températures de 100 à 130°C, éventuellement dans un solvant organique, de préférence hydrocarboné ou aromatique, de préférence toluène, sous atmosphère inerte.
